(19) **Europäisches Patentamt**

**European Patent Office**

**Office européen des brevets**

(11) **EP 1 563 207 B1**

(12) **FASCICULE DE BREVET EUROPEEN**

(45) Date de publication et mention
de la délivrance du brevet:
**14.06.2006 Bulletin 2006/24**

(21) Numéro de dépôt: **03786018.6**

(22) Date de dépôt: **18.11.2003**

(51) Int Cl.:
**F16H 61/02** (2006.01)      **F16H 61/10** (2006.01)

(86) Numéro de dépôt international:
**PCT/FR2003/003412**

(87) Numéro de publication internationale:
**WO 2004/048819 (10.06.2004 Gazette 2004/24)**

(54) **PROCEDE DE CONTROLE DU CHOIX DU RAPPORT DE DEMULTIPLICATION D'UNE TRANSMISSION AUTOMATIQUE**

AUSWAHLVERFAHREN FÜR DIE ÜBERSETZUNG EINES AUTOMATISCHEN GETRIEBES

METHOD FOR CONTROLLING SELECTION OF AN AUTOMATIC TRANSMISSION GEAR RATIO

(84) Etats contractants désignés:
**AT BE BG CH CY CZ DE DK EE ES FI GB GR HU
IE IT LI LU MC NL PT RO SE SI SK TR**

(30) Priorité: **21.11.2002 FR 0214559**

(43) Date de publication de la demande:
**17.08.2005 Bulletin 2005/33**

(73) Titulaire: **Renault s.a.s.
92100 Boulogne Billancourt (FR)**

(72) Inventeur: **AUBERT, Olivier
F-92370 Chaville (FR)**

(74) Mandataire: **Rougemont, Bernard
RENAULT TECHNOCENTRE
Département Propriété Intellectuelle
Sce 00267 TCR GRA 2 36
1, avenue du Golf
78288 Guyancourt cedex (FR)**

(56) Documents cités:
**EP-A- 1 248 021          DE-A- 10 106 935
FR-A- 2 461 169          US-A- 6 067 495**

**Description**

La présente invention porte sur un procédé de contrôle du choix du rapport de démultiplication d'une transmission pour un véhicule équipé d'une transmission automatique à rapports étagés ou à variation continue, notamment pour le fonctionnement dudit véhicule avec un régulateur ou un limiteur de vitesse. Il est connu de mettre en oeuvre des stratégies spécifiques de contrôle du choix du rapport de transmission d'une transmission automatique à rapports étagés pour supprimer les instabilités des boîtes de vitesse automatiques appelées phénomène de pompage. Ce phénomène se traduit par une fréquence excessive des changements de rapports, d'un rapport au rapport supérieur et inversement, lorsque l'effort résistant exercé sur le véhicule devient important (route pentue, vent fort, ...). En effet, lorsque l'effort résistant augmente, par exemple lorsque le véhicule aborde une côte, ledit véhicule a tendance à ralentir, et le conducteur appuie sur la pédale d'accélérateur pour compenser cette perte de vitesse. Lorsque la demande du conducteur (enfoncement de la pédale d'accélérateur) dépasse un certain seuil, le système de gestion automatique de la boîte de vitesse déclenche une rétrogradation sur un rapport plus court. Cette rétrogradation permet au véhicule de fournir un effort suffisant pour accélérer, et le conducteur a tendance à relever le pied de la pédale d'accélérateur une fois que la vitesse désirée a été atteinte.

Le véhicule ayant retrouvé sa vitesse initiale, et le conducteur ayant relevé le pied de la pédale d'accélérateur, le système du gestion automatique de la boîte de vitesse déclenche un passage sur le rapport supérieur, et on se retrouve dans les conditions initiales qui vont conduire à une perte de vitesse du véhicule (l'effort résistant n'ayant pas diminué). A nouveau, le conducteur va chercher à compenser cette perte de vitesse, un passage sur le rapport inférieur va être déclenché, et ainsi de suite... Ce phénomène d'oscillation entre deux rapports de démultiplication de la transmission apparaît également lorsque la vitesse du véhicule est contrôlée par un régulateur automatique de vitesse, ledit régulateur pilotant les mêmes moyens de commande que le conducteur (degré d'ouverture du papillon d'admission par exemple dans le cas des moteurs à allumage commandé) pour effectuer sa fonction de régulation de la vitesse.

Afin d'éliminer ce phénomène de pompage de rapports, il a été proposé, notamment dans le cadre de systèmes de régulation automatique de vitesse, des solutions pour prendre le contrôle du système automatique de gestion de la boîte de vitesse, et notamment forcer des rétrogradations ou inhiber des allongements de rapports en fonction de critères spécifiques. On trouve par exemple dans les documents US 4 421 192, US 4 697 478, EP 142 046, US 5 270 934, et US 5 479 349, la description de systèmes de régulation de vitesse d'un véhicule, mettant en oeuvre des algorithmes de pilotage de transmissions automatiques à rapports étagés, prévus spécifiquement pour l'élimination du phénomène de pompage. Ces algorithmes conduisent au déclenchement forcé d'une rétrogradation (passage à un rapport inférieur) sur constatation d'une perte de vitesse du véhicule par rapport à une consigne donnée. Selon les cas, suite à une telle rétrogradation forcée, la méthode consiste à forcer le maintien du véhicule dans le rapport inférieur pendant un certain temps après que le véhicule ait retrouvé sa vitesse de consigne (US 4 421 192, US 4 697 478), ou à conditionner le passage au rapport supérieur au respect de certaines conditions. Dans le cas du document US 5 479 349, le passage au rapport supérieur est interdit tant que la valeur absolue de l'écart de vitesse et celle de l'accélération en cours sont supérieurs à des valeurs prédéterminées. Dans le document EP 142 046, le rapport inférieur est maintenu tant que la vitesse du véhicule ne peut être maintenue sans ouvrir le papillon d'admission d'air au-delà d'une limite prédéterminée. Dans le document US 5 270 934, la condition de maintien dans le rapport inférieur fait intervenir une estimation prédictive, à partir du signal de commande de l'ouverture du papillon, de la vitesse du véhicule si le rapport supérieur était engagé.

Les solutions proposées dans les documents cités ci-dessus, pour éliminer le problème du pompage, sont limitées au cadre de l'utilisation d'un système de régulation de vitesse, et ne permettent pas d'anticiper suffisamment pour éviter les fluctuations de vitesse lors d'une augmentation de la charge résistante exercée sur le véhicule, la rétrogradation n'étant déclenchée qu'après constatation d'une perte de vitesse substantielle.

De plus, le cas de l'utilisation d'un limiteur de vitesse pose un problème nouveau par rapport à l'art antérieur cité ci-dessus, dans la mesure où un limiteur de vitesse est susceptible de fonctionner dans une plage de vitesse et de rapports plus étendue (vers les faibles vitesses et les faibles rapports) que le régulateur de vitesse, utilisé principalement sur autoroute, à vitesse élevée et sur des rapports de transmission les plus élevés.

Les documents US 4 709 595 et US 5 012 419 proposent des astuces pour atténuer le choc lié à la rétrogradation, mais n'apportent pas de solution au besoin d'anticipation de la rétrogradation.

Dans les documents US 5 241 476, FR 2 737 761 et US 5 738 605, sont décrites des techniques d'élimination du problème du pompage basées sur l'inhibition du passage sur un rapport supérieur en fonction de critères portant sur une estimation prédictive de l'accélération que le véhicule connaîtrait sur le rapport supérieur. Ces trois derniers documents nous enseignent certes des méthodes évoluées pour estimer avec une bonne précision l'accélération disponible sur le rapport supérieur, cependant leurs enseignements se limitent à une stratégie d'inhibition du passage au rapport supérieur pour l'élimination du problème de pompage, mais aucune indication n'est donnée pour ce qui concerne le déclenchement de la rétrogradation.

Pour la mise en oeuvre des procédés cités ci-dessus, il est nécessaire de disposer de moyens de pilotage pour inhiber/autoriser le passage à un rapport supérieur ou pour forcer une rétrogradation sur le rapport inférieur. Des solutions sont proposées pour la réalisation de tels moyens de pilotage dans le cadre de transmissions à rapports étagés.

Le but de la présente invention est de proposer un procédé de contrôle du choix du rapport de démultiplication d'une transmission automatique, permettant une adaptation permanente du rapport de démultiplication aux variations d'effort résistant, et éliminant les risques de pompage dans toutes les situations de conduite : à toutes les vitesses et sur tous les rapports.

L'invention a également pour but de proposer une même stratégie physique pour autoriser/inhiber l'allongement du rapport de transmission et demander son raccourcissement si nécessaire, ladite stratégie étant compatible avec les transmissions à rapports étagés ou à variation continue.

Un autre but de l'invention est d'assurer un choix du rapport de transmission permettant le bon suivi d'une cible de vitesse par le conducteur, un régulateur automatique ou un limiteur de vitesse, sans oscillations dudit rapport de transmission.

A cet effet, la présente invention a pour objet un procédé de contrôle du choix du rapport de démultiplication d'une transmission automatique à rapports étagés ou à variation continue pour un véhiculé, comportant des moyens de pilotage pour inhiber/autoriser un allongement du rapport de démultiplication ou déclencher un raccourcissement du rapport de démultiplication. Selon l'invention :

- on mesure le régime moteur courant N(r),

- on détermine le régime moteur N(r+) que prendrait le moteur du véhicule si on procédait à un allongement du rapport de démultiplication de ladite transmission, faisant passer le rapport de démultiplication courant r à un rapport r+ supérieur,

- on détermine un premier seuil d'une grandeur représentative de la puissance minimale devant être fournie par le groupe motopropulseur pour maintenir une consigne de vitesse du véhicule, ladite puissance étant augmentée d'une marge ΔP-,

- on détermine un deuxième seuil de la même grandeur représentative de la puissance minimale devant être fournie par le groupe motopropulseur dans le rapport de transmission r+ pour maintenir la consigne de vitesse du véhicule, ladite puissance étant augmentée d'une marge ΔP+, le premier seuil étant strictement inférieur au deuxième seuil,

- on commande un raccourcissement du rapport de démultiplication de la transmission si la grandeur représentative de la puissance pouvant être fournie par le groupe motopropulseur au régime courant N(r) est inférieure au premier seuil,

- on inhibe l'allongement du rapport de transmission du rapport de transmission si la grandeur représentative de la puissance pouvant être fournie par le groupe motopropulseur au régime N(r+) est inférieure au deuxième seuil,

- on autorise le passage du rapport courant r au rapport supérieur r+, si la grandeur représentative de l'effort pouvant être fourni par le groupe motopropulseur au régime N(r+) est supérieure audit deuxième seuil.

Le procédé selon l'invention assure que la puissance pouvant être fournie par le groupe motopropulseur sur le rapport en cours est toujours supérieure à un seuil représentatif de l'effort résistant augmenté d'une marge, ce qui permet d'assurer le maintien d'une consigne de vitesse. Ce principe pourrait suffire à éliminer le problème de pompage qui apparaît quand la puissance disponible sur le rapport en cours est insuffisante pour compenser l'effort résistant. Cependant, si le premier et le second seuil étaient identiques, on pourrait assister à des oscillations de passage des rapports; dues à de faibles fluctuations de l'effort résistant. L'hystérésis de fonctionnement introduite par la différenciation du premier et du second seuil permet de s'affranchir de ce problème.

Les conditions qui déterminent la commande d'une rétrogradation ou l'autorisation de son allongement étant liées à l'effort résistant en cours, par l'intermédiaire du premier et deuxième seuil, le contrôle du choix du rapport de transmission réalisé par le procédé selon l'invention permet une adéquation du rapport de démultiplication aux évolutions de l'effort résistant.

De plus, le procédé selon l'invention permet d'anticiper suffisamment la rétrogradation lorsque l'effort résistant augmente, puisque dès que la être exprimé sous différentes formes équivalentes telles que la puissance, le couple ou une force longitudinale. Il en est de même pour l'expression de la disponibilité du groupe motopropulseur. C'est pourquoi, la grandeur représentative des puissances prises en compte pour la détermination des seuils et des puissances pouvant être fournies par le groupe motopropulseur pourra être choisie parmi la puissance, le couple, ou la force longitudinale.

On peut utiliser la modélisation évoquée ci-dessus de la courbe caractéristique du groupe motopropulseur donnant l'évolution de la puissance maximale pouvant être fournie par le groupe motopropulseur en fonction du régime moteur, pour faire correspondre respectivement au premier et au deuxième seuil des valeurs de régime moteur NMIN- et NMIN+. Les seuils étant ainsi exprimés sous forme de régime moteur, on peut les comparer directement aux régimes moteur N(r) et N(r+) pour déterminer les conditions qui commandent les actions de contrôle du choix du rapport (commande de rétrogradation, autorisation/inhibition de l'allongement du rapport), ladite comparaison étant équivalente à la comparaison des puissances représentées par lesdits seuils, et des puissances maximales pouvant être fournies par le groupe motopropulseur aux régimes N(r) et N(r+). On définit ainsi un mode particulier de mise en oeuvre de l'invention dans lequel on exprime le premier seuil (NMIN-) et le second seuil (NMIN+) sous la forme de régimes moteur, au moyen d'une modélisation permettant d'établir une correspondance entre les puissances représentée par lesdits premier et second seuils, et des régimes moteurs correspondants, ladite

Selon une première variante de l'invention, lesdites puissances pouvant être fournies par le groupe motopropulseur au régime courant N(r) et au régime N(r+) sont les puissances maximales pouvant être fournies par le groupe motopropulseur aux régimes considérés. Cette variante permet, comme cela est explicité ci-dessous, de simplifier l'estimation de la puissance pouvant être fournie par le groupe motopropulseur aux régimes N(r) et N(r+). En effet, si l'on cherche à calculer la puissance pouvant être fournie immédiatement par le groupe motopropulseur sur un rapport supérieur au rapport en cours, on est amené en toute rigueur à prendre en compte l'état de la commande de puissance du moteur au moment du changement de rapport. En effet, à régime moteur donné, la puissance motrice dépend par exemple du degré d'ouverture du papillon d'admission (cas de moteurs à allumage commandé) ou des conditions d'injection du carburant (cas des moteurs diesel). Cependant, il n'est pas indispensable pour le bon fonctionnement du procédé, de déterminer la disponibilité immédiate du groupe motopropulseur, on peut y substituer sans problème la valeur de la puissance maximale pouvant être fournie rapidement par le groupe motopropulseur moyennant un ajustement de la commande de puissance du moteur. Cette puissance maximale est extrêmement simple à déterminer à partir de la seule donnée d'un régime moteur, par exemple en utilisant une modélisation de la courbe caractéristique du groupe motopropulseur, établissant une correspondance entre régime moteur et puissance maximale.

L'effort résistant exercé sur le véhicule peut puissance pouvant être fournie par le groupe motopropulseur tombe à une valeur inférieure à l'effort devant être fourni pour maintenir une consigne, de vitesse, augmenté d'une marge, ladite rétrogradation est commandée. Ainsi, la rétrogradation se produit de manière suffisamment anticipée pour éviter toute fluctuation de vitesse due à une augmentation de l'effort résistant, le procédé selon l'invention est par conséquent particulièrement bien adapté à l'utilisation d'un régulateur de vitesse.

Le procédé selon l'invention pourra être appliqué à tout système de contrôle du rapport de transmission d'une transmission automatique, géré par d'autres algorithmes de choix, sous réserve que l'on dispose de moyens de pilotage permettant d'inhiber/autoriser un allongement du rapport, et de déclencher un raccourcissement du rapport. Les contraintes définies par le procédé selon l'invention décrite ci-dessus sont appliquées, s'ajoutant aux contraintes ou critères issus d'autres stratégies. Dans le cas des transmissions à variation continue notamment, la demande de rétrogradation peut se traduire en pratique par une consigne de vitesse de rotation minimale du moteur. Il suffit d'exprimer le premier seuil sous la forme d'un régime moteur pour avoir directement la valeur de ladite consigne. Ainsi, le procédé est non seulement compatible avec les transmissions à variation continue, mais il permet de déterminer directement un paramètre de commande pour sa mise en oeuvre en pratique dans ce cas. modélisation étant celle d'une courbe caractéristique du groupe motopropulseur donnant l'évolution d'une grandeur représentative de la puissance maximale pouvant être fournie par ledit groupe motopropulseur, en fonction du régime moteur. En conséquence :

- on commande un raccourcissement du rapport de démultiplication de la transmission si le régime moteur courant N(r) est inférieur audit premier seuil (NMIN-),

- on inhibe l'allongement du rapport de transmission du rapport de transmission si le régime moteur N(r+) est inférieur audit second seuil (NMIN+),

- on autorise le passage du rapport courant r au rapport supérieur r+, si le régime moteur N(r+) est supérieur audit second seuil (NMIN+).

Pour calculer l'effort résistant, on peut par exemple utiliser la modélisation de la dynamique longitudinale du véhicule exprimée par la relation R1 ci-dessous :

$$F_{GMP} + F_{freins} + F_{res} = MV \, \gamma \quad (R1)$$

où $F_{GMP}$, $F_{freins}$ et $F_{res}$ représentant les forces longitudinales appliquées au véhicule, $F_{GMP}$ étant la force fournie par le groupe motopropulseur, $F_{freins}$ la force de freinage produite par le système de freinage du véhicule, et $F_{res}$ la force

représentative de l'effort résistant, MV étant la masse du véhicule et γ son accélération courante.

Une fois transformée, cette relation permet d'exprimer la force longitudinale F$_{res}$ sous la forme ci-dessous :

$$F_{res} = MV \; \gamma - F_{GMP} - F_{freins} \quad (R2)$$

Cette dernière relation R2 fait apparaître clairement qu'il est suffisant que le calcul de l'effort résistant exercé sur le véhicule (représentée dans la relation R2 par la force F$_{res}$), permettant de déterminer la puissance minimale devant être fournie par le groupe motopropulseur pour maintenir une consigne de vitesse, comporte une étape de calcul de l'effort courant fourni par le groupe motopropulseur (ledit effort pouvant être exprimé sous la forme d'une force longitudinale F$_{GMP}$), de la masse du véhicule (MV) et de son accélération (γ). Il ne reste plus alors qu'à déterminer l'effort exercé par le système de freinage (celui-ci étant nul lorsque les freins ne sont pas utilisés), représenté dans la relation R2 par la force F$_{freins}$.

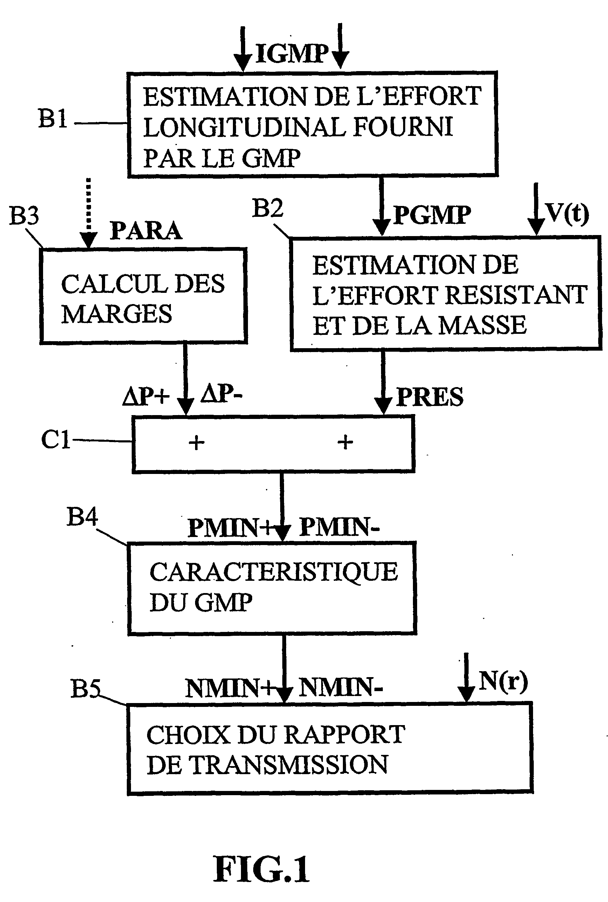

La relation R2 fait apparaître également que toute erreur d'estimation du produit de la masse MV par l'accélération γ, ou de la valeur de la force de freinage F$_{freins}$ affecte directement le calcul de l'effort résistant. C'est pourquoi la masse du véhicule (MV) est avantageusement déterminée par une estimation dynamique de la masse du véhicule (comme par exemple celle qui est décrite ci-dessous dans les commentaires relatifs à la figure 1). De même, lors des phases de freinage, le calcul de l'effort résistant comportera avantageusement une étape dans laquelle on détermine la valeur de l'effort produit par le système de freinage, ladite valeur étant obtenue par une information représentative de la pression de freinage et un modèle établissant une correspondance entre ladite pression et ledit effort de freinage. En effet, un tel mode de détermination de l'effort de freinage permet d'obtenir des résultats précis et fiables. Eventuellement, on pourrait estimer la force de freinage de manière plus grossière (force supposée constante lors des freinages par exemple).

Afin d'éviter tout risque d'erreur lié à l'estimation de l'effort de freinage, on peut utiliser un mode particulier de mise en oeuvre du procédé selon l'invention caractérisé en ce que, lors des phases de freinage, on suspend le calcul de l'effort résistant.

Il est utile de disposer de moyens pour optimiser en dynamique le fonctionnement du procédé selon l'invention, par exemple en jouant sur la valeur des marges ΔP+ et ΔP-. C'est pourquoi les marges ΔP+ et ΔP- pourront avantageusement être déterminées en tenant compte du rapport de démultiplication de la transmission en cours (r), et/ou d'une grandeur représentative de l'effort résistant. Cependant, pour simplifier la mise en oeuvre du procédé selon l'invention, et éviter d'avoir deux paramètres à ajuster, on pourra fixer la marge ΔP- à zéro, et choisir la marge ΔP+ constante et strictement positive.

L'invention sera mieux comprise en se référant à la description suivante faite à titre d'exemple non limitatif et aux dessins ci-annexés dans lesquels :

- la figure 1 est un diagramme illustrant un exemple de réalisation du procédé de contrôle du choix du rapport de transmission relatif à l'invention,

- la figure 2 est un ensemble de graphiques illustrant le cas d'un véhicule équipé d'une transmission à rapports étagés roulant à vitesse stable dans une pente ascendante,

- la figure 3 est similaire à la figure 2 et illustre le cas d'un véhicule dont la vitesse augmente dans une pente ascendante constante,

- la figure 4 est similaire à la figure 2 et illustre le cas d'un véhicule roulant à vitesse constante lorsque la pente diminue,

- la figure 5 est similaire à la figure 2 et illustre le cas d'un véhicule roulant à vitesse constante lorsque la pente augmente,

- la figure 6 est similaire à la figure 2 et illustre le cas d'un véhicule dont la vitesse diminue dans une pente ascendante constante.

Sur la figure 1 les étapes du procédé relatif à l'invention sont représentées sous forme de blocs fonctionnels B1, B2, B3, C1, B4, B5, liés entre eux par des flèches représentant les transferts de variables. Les transferts de variables non issues du traitement par l'un des blocs fonctionnels, mais provenant par exemple de capteurs situés sur le groupe motopropulseur, ou d'organes de commande du moteur, sont indiqués par des flèches dont l'origine n'est reliée à aucun bloc fonctionnel.

Les systèmes de contrôle actuels des moteurs, essence comme diesel, sont capables d'estimer le couple effectif fourni par le moteur à partir des capteurs disponibles (régime, pressions, températures, débit d'air, etc...) et de grandeurs de commande des actionneurs (temps d'injection, pilotage turbo, admission ou distribution variable).

Connaissant l'état de la transmission (rapport de démultiplication) et de l'organe de couplage (coupleur, embrayage ou convertisseur de couple), il est possible, à partir de la donnée du couple effectif fourni par le moteur, d'estimer la participation du groupe motopropulseur à la dynamique longitudinale du véhicule, et de l'exprimer sous forme d'effort longitudinal ou de puissance motrice fournie au véhicule.

Ainsi par exemple, on pourra réaliser la fonction du bloc B1, qui consiste à estimer l'effort longitudinal fourni par le groupe motopropulseur, à partir d'un ensemble d'informations IGMP représentant l'état de fonctionnement dudit groupe motopropulseur.

Le résultat du traitement par le bloc B1, est transmis au bloc B2, par exemple exprimé sous forme d'une puissance PGMP. Le bloc B2 a pour fonction l'estimation de la masse MV du véhicule et de l'effort résistant PRES exercé sur ledit véhicule. Cette estimation requiert la donnée de la vitesse instantanée V(t) du véhicule à l'instant t, qui pourra être fournie au bloc B2, par exemple par un capteur de vitesse. Pour ce qui concerne le calcul de la masse MV, on pourra utiliser par exemple la méthode décrite dans le document FR 2 737 761 Cette méthode consiste à déterminer entre deux instants t et t', la variation $\Delta C$ du couple roue et la variation $\Delta \gamma$ de l'accélération du véhicule. Le couple roue est déterminé par la donnée du couple moteur et du rapport de démultiplication de la transmission, ledit couple moteur étant déterminé grâce à la donnée du régime moteur courant et de l'angle d'ouverture du papillon d'admission. L'accélération du véhicule est déterminée en observant les variations de la vitesse du véhicule, ladite vitesse étant donnée grâce à un capteur de vitesse. Lorsque les deux instants t et t' sont suffisamment éloignés pour que les variations de couple et d'accélération soient significatives, et suffisamment proches pour que les efforts résistants varient peu, la relation qui lie $\Delta C$ et $\Delta \gamma$ est :

$$MV.\Delta\gamma = \Delta C/rayon \quad (R3)$$

où rayon désigne le rayon de la roue.

La relation (R3) permet de calculer la masse du véhicule, cependant, afin de minimiser les fluctuations de l'estimation de MV, on utilise une série de p couples $(\Delta C(i), \Delta\gamma(i))$, déterminés à des instants différents, et on effectue un traitement mathématique sur ladite série pour déterminer la valeur M permettant de minimiser l'écart quadratique J suivant :

$$J = E \ (i=1 \ \text{à} \ i=p) \ (M.\Delta\gamma(i) - \Delta C(i)/rayon)^2$$

Cette valeur M est calculée à chaque fois qu'un nouveau « bon couple » $(\Delta C, \Delta\gamma)$ est déterminé (certains des couples $(\Delta C, \Delta\gamma)$ ne répondant pas à une série de critères sont éliminés), ladite valeur M étant utilisée pour alimenter un bloc de traitement qui réalise une moyenne tenant compte des valeurs de M calculées précédemment. La moyenne résultant de ce traitement est représentative, à tout moment, de la masse du véhicule, la méthode permet par conséquent de réaliser une estimation dynamique de la masse du véhicule. Cette méthode a été décrite à titre d'exemple, on pourra utiliser d'autres méthodes pour la mise en oeuvre du procédé selon l'invention.

Pour l'identification de l'effort résistant, on pourra par exemple utiliser la modélisation de la dynamique longitudinale du véhicule citée ci-dessus et qu'on rappelle ci-dessous :

$$F_{res} = MV \ \gamma - F_{GMP} - F_{freins} \quad (R2)$$

L'accélération $\gamma$ peut être déterminée par exemple par observation de l'évolution temporelle de la vitesse V(t). La force $F_{GMP}$, représentant la force de traction fournie par le groupe motopropulseur, est obtenue à partir de la valeur de la puissance PGMP transmise par le bloc B1 grâce à la relation R3 ci-dessous :

$$F_{res} = PGMP / V(t) \quad (R3)$$

Pour la détermination de la force de freinage F$_{freins}$, on pourra utiliser l'une des méthodes citées précédemment. Ayant identifié tous les paramètres du second membre de la relation R2, on peut calculer la force longitudinale F$_{res}$, et exprimer celle-ci sous la forme d'une puissance PRES, représentative de l'effort résistant, qui est transmise au bloc C1.

Le rôle du bloc B3 est la détermination desdites marges ΔP+ et ΔP-. Cette détermination pourra être faite en dynamique, éventuellement en fonction de paramètres (symbolisés par la flèche en pointillé à laquelle est associée la variable PARA). On pourra aussi utiliser tout simplement des valeurs fixes, et notamment une valeur nulle pour ΔP-, ΔP+ étant strictement positif (par exemple ΔP+ =10 kW).

Le bloc de calcul CI détermine la valeur du premier et du second seuil, à partir des valeurs de ΔP+ et ΔP- fournies par le bloc B3, et de la valeur de PRES fournie par le bloc B2. Dans l'exemple choisi, ces seuils sont exprimés sous forme de puissance, et sont calculés très facilement comme suit :

Premier seuil : PMIN- = PRES + ΔP-

Deuxième seuil : PMIN+ = PRES + ΔP+

Le bloc B4 reçoit les seuils PMIN- et PMIN+ exprimés sous forme de puissance, et fait correspondre à ces valeurs les régimes moteur NMIN- et NMIN+, par une méthode conforme à celle décrite ci-dessus (utilisation de la modélisation d'une courbe caractéristique du groupe motopropulseur donnant l'évolution de la puissance maximale pouvant être fournie par le groupe motopropulseur en fonction du régime moteur).

Si l'on veut que la stratégie fonctionne même dans les cas où les performances moteur sont dégradées (par exemple lors de fonctionnement en altitude ou à basse température), on pourra utiliser une modélisation plus complète de la caractéristique du groupe motopropulseur, tenant compte de ces facteurs.

Les variables PGMP, PRES, ΔP+, ΔP-, PMIN+ et PMIN-, transmises entre les différents blocs peuvent être exprimées en puissance comme cela a été suggéré ci-dessus, mais elles pourraient être exprimées dans d'autres grandeurs de sortie du groupe motopropulseur comme le couple roue ou la force de traction longitudinale, sans remettre en cause le principe de l'invention.

Le bloc B5 reçoit une information représentative du régime moteur courant N(r), r étant le rapport courant de démultiplication de la transmission. A partir de cette information, on détermine la valeur N(r+) que prendrait le régime moteur si on passait à un rapport de démultiplication supérieur r+, par exemple en utilisant la formule ci-dessous :

$$N(r+) = N(r).(r/r+)$$

Le choix du rapport de démultiplication de la transmission est déterminé dans le bloc B5 par comparaison des valeurs N(r) et N(r+) aux valeurs NMIN+ et NMIN-, selon les règles déjà évoquées ci-dessus :

- si N(r) est strictement inférieur à NMIN- : on déclenche un raccourcissement du rapport de démultiplication ;

- si N(r+) est strictement inférieur NMIN+ : on inhibe l'allongement du rapport ;

- si N(r+) est supérieur ou égal à NMIN+ : on autorise l'allongement du rapport de transmission r en cours au rapport supérieur r+.

Les contraintes relatives au procédé objet de l'invention, exprimées ci-dessus sous forme de régimes moteur, se traduisent, sur une transmission à variation continue, par une évolution continue du rapport de transmission, et sur une transmission à rapports étagés, par un passage montant dès que la vitesse du véhicule permettra de le faire en raccrochant un régime moteur supérieur à NMIN+, et une rétrogradation sera déclenchée dès que le régime moteur tombe en dessous de NMIN-.

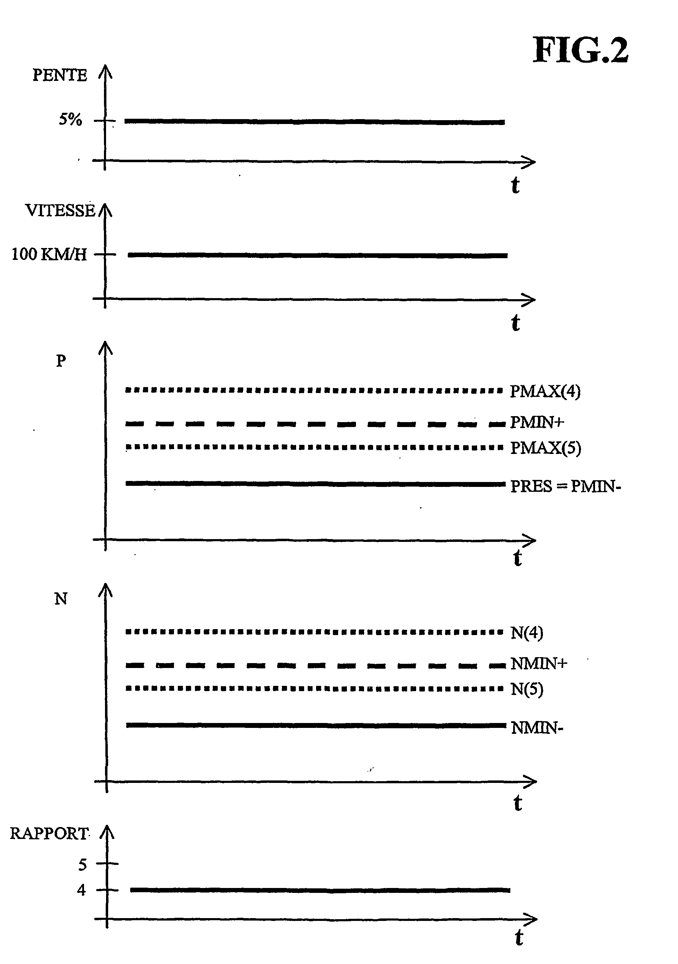

Le fonctionnement du procédé selon l'invention est illustré par des exemples dans les figures 2 à 6 décrites ci-dessous, dans le cas d'une transmission à rapports étagés. Pour ces exemples, la valeur de ΔP- a été choisie égale à zéro (d'où PRES = PMIN-), et celle de ΔP+ égale à une constante (positive). Sur chacune des figures sont représentés cinq graphes représentant l'évolution simultanée de la pente (PENTE), de la vitesse du véhicule (VITESSE), d'une grandeur (P) exprimant la disponibilité instantanée du groupe motopropulseur (par exemple une puissance), du régime moteur (N), et du rapport de démultiplication (RAPPORT), en fonction du temps (t). Ces graphes permettent d'observer le résultat du procédé de choix du rapport de transmission selon l'invention, appliqué dans différents cas de figure. On se limite pour les exemples choisis aux quatrième et cinquième rapport, mais les résultats pourraient être transposés à deux autres rapports successifs.

La figure 2 illustre le cas d'un véhicule roulant sur une pente ascendante constante (à 5%), à vitesse constante (100 km/h). La transmission est sur le quatrième rapport, ce qui permet d'avoir une disponibilité du groupe motopropulseur égale à PMAX(4) supérieure à PMIN+. Si on passait le cinquième rapport, la disponibilité du groupe motopropulseur tomberait à PMAX(5), inférieure à PMIN+, et donc insuffisante pour maintenir la vitesse du véhicule. Le conducteur ou le régulateur augmenterait sa consigne jusqu'à déclencher une rétrogradation sur le quatrième rapport (rapport initial) et ainsi de suite : ce serait le phénomène indésirable de pompage de rapport.

Le graphe de l'évolution des régimes en fonction du temps permet de constater que le régime sur le quatrième rapport (N(4)) est supérieur à NMIN+, mais que le régime correspondant N(5) si on passait le cinquième rapport est inférieur à NMIN+. Dans ces conditions, en application des règles de choix selon l'invention, le passage du quatrième au cinquième rapport est inhibé, ce qui élimine le problème de pompage de rapport.

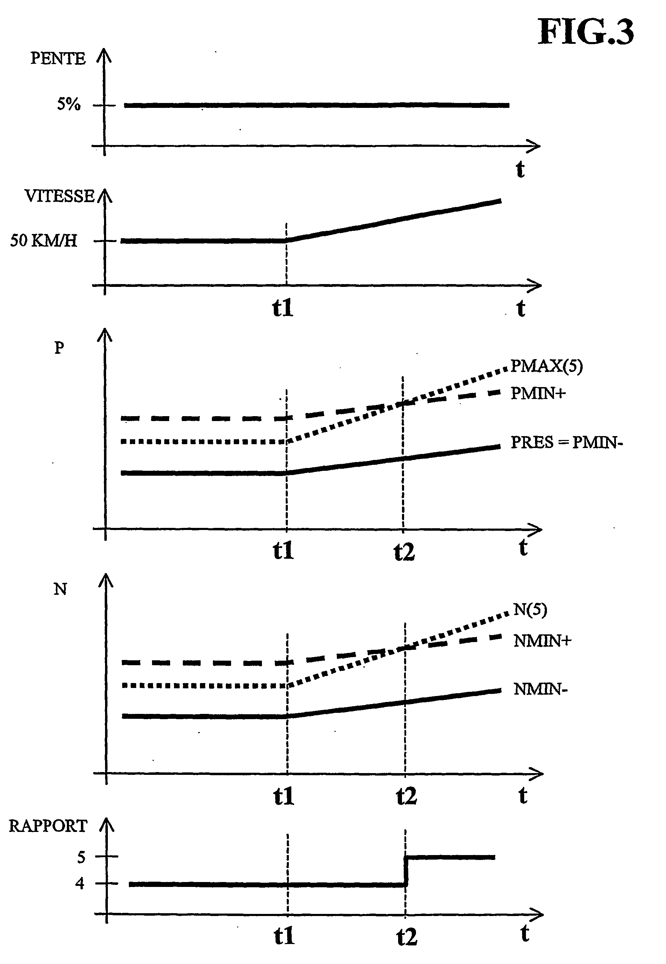

Sur la figure 3 est illustré le cas d'un véhicule roulant sur une pente ascendante constante (à 5%), et dont la vitesse, initialement fixée à 50km/h, augmente à partir de l'instant t1. Initialement, comme dans le cas de la figure 2, le procédé de choix selon l'invention interdit le passage du quatrième au cinquième rapport, parce que le régime moteur N (5) auquel conduirait cet allongement du rapport est inférieur au régime minimal NMIN+ calculé. A partir de l'instant t1, l'augmentation de la vitesse produit une augmentation de l'effort résistant PRES, donc de PMIN- et NMIN+, mais également une augmentation de N(5) et de PMAX(5) qui en découle. A partir d'une certaine vitesse, PMAX(5) devient supérieur à PMIN+, donc NMIN+ calculé par le procédé de choix selon l'invention devient inférieur à N(5), à partir d'un instant t2 supérieur à t1, et le passage montant au cinquième rapport est autorisé.

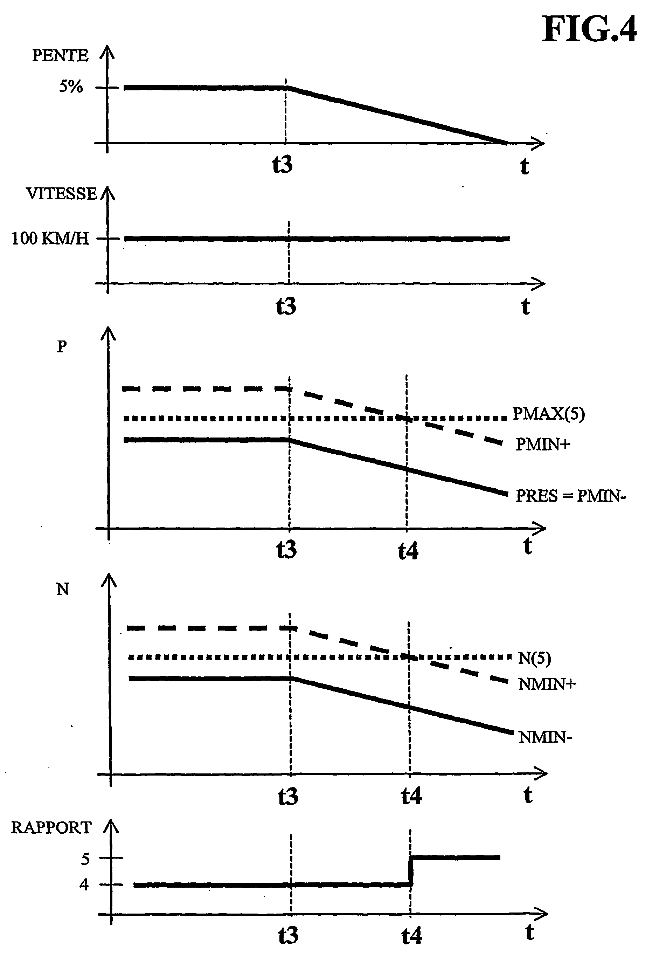

Sur la figure 4 est illustré le cas d'un véhicule roulant à vitesse constante (100 km/h), sur une route ascendante dont la pente, initialement constante (à 5%), diminue à partir de l'instant t3. La transmission est initialement sur le quatrième rapport, mais le passage au cinquième rapport est interdit parce qu'il conduirait à un régime N(5) inférieur à NMIN+. Mais comme la pente diminue, l'effort résistant estimé PRES diminue, conduisant à une diminution de PMIN+ et NMIN+: A partir de l'instant t4, NMIN+ devient inférieur à N(5), et le passage montant du quatrième au cinquième rapport est autorisé.

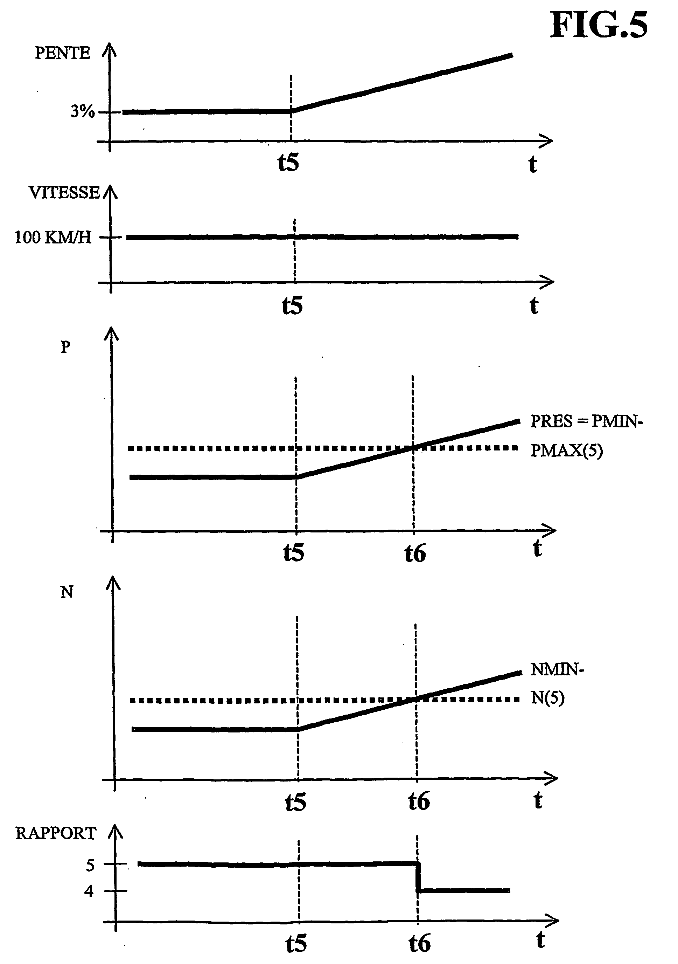

Sur la figure 5 est illustré le cas d'un véhicule roulant initialement sur une route ascendante, dont la pente initialement constante (à 3%) augmente à partir de l'instant t5. Initialement sur le cinquième rapport, suffisant pour le maintien du véhicule à vitesse constante tant que la pente est de 3%, il sera nécessaire de procéder à une rétrogradation pour maintenir la vitesse dudit véhicule lorsque la pente va augmenter. La vitesse étant constante, le régime moteur N (5) et la puissance maximale disponible PMAX(5) sont constants, mais à partir de l'instant t5, l'augmentation de la pente produit une augmentation de l'effort résistant, et de son estimation PRES. Suite à cette augmentation de PRES, PMIN- étant égale à PRES devient supérieure à PMAX(5), donc le régime minimal NMIN- calculé devient supérieur au régime courant N(5) (à l'instant t6) et une rétrogradation sur le quatrième rapport est déclenchée, en application des règles relatives au procédé selon l'invention. La rétrogradation ayant été déclenchée avant que la puissance maximale disponible sur le cinquième rapport PMAX(5) ne devienne inférieure à l'effort résistant PRES, il a été possible de maintenir le véhicule à vitesse constante jusqu'à l'instant t6, et après l'instant t6, une rétrogradation ayant été réalisée, le groupe motopropulseur dispose d'une puissance suffisante pour maintenir la vitesse initiale.

Par conséquent, le procédé de choix du rapport de transmission selon l'invention a permis le maintien à vitesse parfaitement constante du véhicule, bien que celui-ci ait été soumis à une augmentation sensible de l'effort résistant nécessitant une rétrogradation. Cet exemple illustre bien l'avantage du procédé selon l'invention combiné à l'utilisation d'un régulateur de vitesse : il n'a pas été nécessaire de constater une perte de vitesse pour produire la rétrogradation nécessaire, celle-ci a été suffisamment anticipée. On remarquera d'ailleurs qu'il en est de même si on mettait en oeuvre un limiteur de vitesse, la vitesse courante du véhicule étant la vitesse maximale de consigne. Enfin, la rétrogradation ayant été suffisamment anticipée (dès l'entrée en saturation), elle ne provoque pas d'augmentation brutale de l'accélération, et est par conséquent plus confortable pour les occupants du véhicule que si elle avait eu lieu après constatation d'une perte de vitesse. Bien entendu, des techniques connues pour adoucir la rétrogradation peuvent être mises en oeuvre en complément pour optimiser le confort.

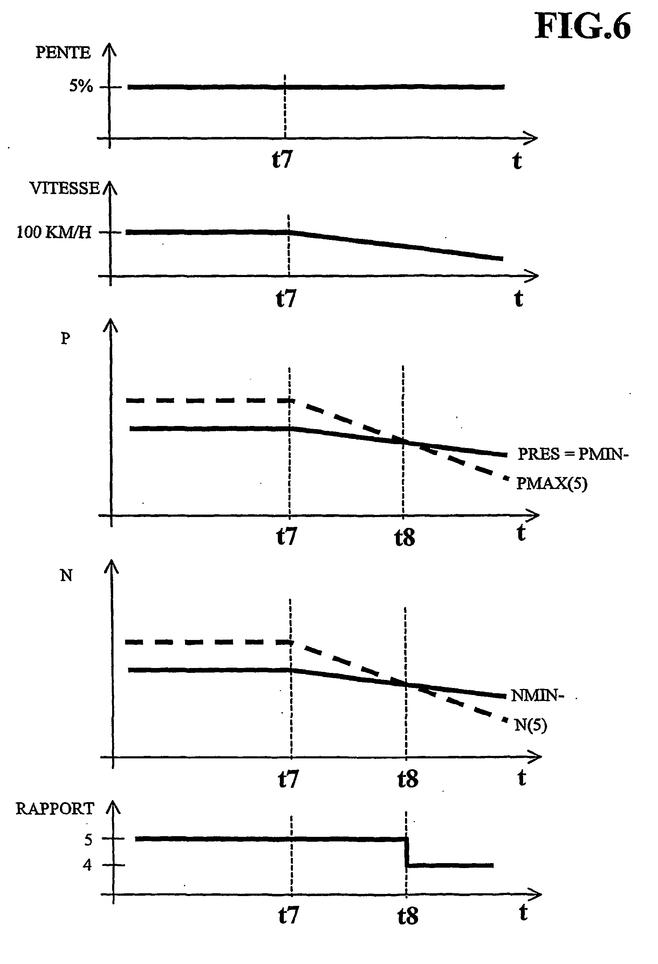

Sur la figure 6, est illustré le cas d'un véhicule à vitesse initialement constante (100km/h) dans une pente ascendante constante, sur le cinquième rapport. Si le véhicule ralentit (suite à une décision du conducteur par exemple qui lève le pied de l'accélérateur), à partir d'une certaine vitesse, une rétrogradation va devenir nécessaire.

La chute de vitesse (à partir de l'instant t7) produit une diminution de l'effort résistant PRES, et donc de PMIN+ et PMIN-, mais également une chute du régime courant N(5) et de PMAX (5) qui en découle. En dessous d'une certaine vitesse, PMAX (5) devient inférieure à PRES, la vitesse courante ne pourrait plus être maintenue sur le cinquième rapport, la rétrogradation est nécessaire. PMIN- (égal à PRES avec $\Delta$P-=0 dans l'exemple) devenant supérieur à PMAX (5), le régime minimal NMIN- calculé devient supérieur au régime courant N(5) (à l'instant t8), et donc une rétrogradation sur le quatrième rapport est déclenchée en respect des règles de choix selon l'invention. Comme dans le cas de la figure 5, cette rétrogradation est déclenchée avant l'entrée en saturation, ce qui permet une rétrogradation confortable.

Dans les cas de figure illustrés ci-dessus, le véhicule est soumis à un effort résistant PRES positif, reflétant des situations dans lesquelles le véhicule roule sur une pente ascendante. Le procédé selon l'invention fonctionne tout aussi bien dans le cas où l'effort résistant devient négatif, par exemple dans une pente descendante. Si la valeur de PRES diminue et tombe à une valeur négative, la puissance potentielle du groupe motopropulseur sur le rapport supérieur passe nécessairement à une valeur supérieure audit effort résistant augmenté d'une marge. Par conséquent, un allongement du rapport sera autorisé, ce qui est tout à fait adapté à une telle situation.

Il est aisé de vérifier également que le procédé de contrôle selon l'invention reste parfaitement compatible avec tout système de choix automatique du rapport de démultiplication de la transmission déclenchant une rétrogradation en cas de besoin de frein moteur, puisque ledit procédé ne comporte pas de condition d'inhibition de la rétrogradation.

Enfin, le procédé de contrôle selon l'invention est également compatible avec les systèmes automatiques de choix du rapport gérant de manière autonome les limites du régime moteur.

## Revendications

1. Procédé de contrôle du choix du rapport de démultiplication d'une transmission automatique à rapports étagés ou à variation continue pour un véhicule, comportant des moyens de pilotage pour inhiber/autoriser un allongement du rapport de démultiplication ou déclencher un raccourcissement du rapport de démultiplication, **caractérisé en ce que** :

   - on mesure le régime moteur courant N(r),
   - on détermine le régime moteur N(r+) que prendrait le moteur du véhicule si on procédait à un allongement du rapport de démultiplication de ladite transmission, faisant passer le rapport de démultiplication courant r à un rapport r+ supérieur,
   - on détermine un premier seuil (PMIN-, NMIN-) d'une grandeur représentative de la puissance minimale (PRES) devant être fournie par le groupe motopropulseur pour maintenir une consigne de vitesse du véhicule, ladite puissance étant augmentée d'une marge (ΔP-),
   - on détermine un deuxième seuil (PMIN+, NMIN+) de la même grandeur représentative de la puissance minimale (PRES) devant être fournie par le groupe motopropulseur dans le rapport de transmission r+ pour maintenir la consigne de vitesse du véhicule, ladite puissance étant augmentée d'une marge (ΔP+), le premier seuil étant strictement inférieur au deuxième seuil,
   - on commande un raccourcissement du rapport de démultiplication de la transmission si la grandeur représentative de la puissance pouvant être fournie par le groupe motopropulseur au régime courant N(r) est inférieure au premier seuil
   - on inhibe l'allongement du rapport de transmission du rapport de transmission si la grandeur représentative de la puissance pouvant être fournie par le groupe motopropulseur au régime N(r+) est inférieure au deuxième seuil,
   - on autorise le passage du rapport courant r au rapport supérieur r+, si la grandeur représentative de l'effort pouvant être fourni par le groupe motopropulseur au régime N(r+) est supérieure audit deuxième seuil.

2. Procédé selon la revendication 1, **caractérisé en ce que** lesdites puissances pouvant être fournies par le groupe motopropulseur au régime courant N(r) et au régime N(r+) sont les puissances maximales pouvant être fournies par le groupe motopropulseur aux régimes considérés.

3. Procédé selon l'une des revendications 1 ou 2, **caractérisé en ce que** la grandeur représentative des puissances prises en compte pour la détermination des seuils et des puissances pouvant être fournies par le groupe motopropulseur est choisie parmi la puissance, le couple, ou la force longitudinale.

4. Procédé selon la revendication 2, **caractérisé en ce qu'**on exprime le premier seuil (NMIN-) et le second seuil (NMIN+) sous la forme de régimes moteur, au moyen d'une modélisation permettant d'établir une correspondance entre les puissances représentée par lesdits premier et second seuils, et des régimes moteurs correspondants, ladite modélisation étant celle d'une courbe caractéristique du groupe motopropulseur donnant l'évolution d'une grandeur représentative de la puissance maximale pouvant être fournie par ledit groupe motopropulseur, en fonction du régime moteur,

   - on commande un raccourcissement du rapport de démultiplication de la transmission si le régime moteur courant N(r) est inférieur audit premier seuil (NMIN-),
   - on inhibe l'allongement du rapport de transmission du rapport de transmission si le régime moteur N(r+) est inférieur audit second seuil (NMIN+),
   - on autorise le passage du rapport courant r au rapport supérieur r+, si le régime moteur N(r+) est supérieur audit second seuil (NMIN+).

5. Procédé selon l'une des revendications 1 à 4, **caractérisé en ce que** le calcul de l'effort résistant exercé sur le véhicule, permettant de déterminer la puissance minimale (PRES) devant être fournie par le groupe motopropulseur pour maintenir une consigne de vitesse, comporte une étape de calcul de l'effort courant fourni par le groupe motopropulseur (PGMP), de la masse du véhicule (MV) et de son accélération ($\gamma$).

6. Procédé selon la revendication 5,
**caractérisé en ce que** la masse du véhicule (MV) est déterminée par une estimation dynamique de la masse du véhicule.

7. Procédé selon l'une des revendications 1 à 6, **caractérisé en ce que**, lors des phases de freinage, le calcul de l'effort résistant comporte une étape dans laquelle on détermine la valeur de l'effort produit par le système de freinage, ladite valeur étant obtenue par une information représentative de la pression de freinage et un modèle établissant une correspondance entre ladite pression et ledit effort de freinage.

8. Procédé selon l'une des revendications 1 à 6, **caractérisé en ce que**, lors des phases de freinage, on suspend le calcul de l'effort résistant.

9. Procédé selon l'une des revendication 1 à 8, **caractérisé en ce que** les marges $\Delta P+$ et $\Delta P-$ sont déterminées en tenant compte du rapport de démultiplication de la transmission en cours (r), et/ou d'une grandeur représentative de l'effort résistant.

10. Procédé selon l'une des revendications 1 à 9, **caractérisé en ce que** la marge $\Delta P-$ est égale à zéro, et la marge $\Delta P+$ est choisie constante et strictement positive.

11. Véhicule équipé d'une transmission automatique à rapports étagés ou à variation continue, comportant des moyens de choix automatique du rapport de démultiplication de la transmission, et des moyens de pilotage pour superviser lesdits moyens de choix automatique, lesdits moyens de pilotage permettant notamment d'inhiber/autoriser un allongement du rapport de démultiplication ou de déclencher un raccourcissement du rapport de démultiplication, **caractérisé en ce que** le choix du rapport de démultiplication de ladite transmission est contrôlé par un procédé selon l'une des revendications 1 à 10.

12. Véhicule selon la revendication 11,
**caractérisé en ce que** il comporte un système automatique de régulation/limitation de la vitesse.

**Claims**

1. A process for controlling the choice of the reduction ratio of an automatic transmission with stepped ratios or with a continuous variation for a vehicle, comprising pilot control means for inhibiting/authorising an increase in the length of the reduction ratio or triggering a reduction in length of the reduction ratio,
**characterised in that**:

    - the current engine speed N(r) is measured,
    - the engine speed N(r+) is determined that the engine of the vehicle would assume if an increase in the length of the reduction ratio of said transmission were implemented, causing the current reduction ratio r to go to a higher ratio r+,
    - a first threshold (PMIN-, NNIN-) of a parameter representative of the minimum power (PRES) to be produced by the power unit to maintain a speed reference of the vehicle is determined, said power being increased by a margin ($\Delta P-$),
    - a second threshold (PMIN+, NMIN-) of the same parameter representative of the minimum power (PRES) to be produced by the power unit in the transmission ratio r+ to maintain the speed reference of the vehicle is determined, said power being increased by a margin ($\Delta P+$), the first threshold being strictly lower than the second threshold,
    - a reduction in length of the reduction ratio of the transmission is controlled if the parameter representative of the power which can be produced by the power unit at the current engine speed N(r) is lower than the first threshold,

- the increase in length of the transmission ratio of the transmission ratio is inhibited if the parameter representative of the power which can be produced by the power unit at the engine speed N(r+) is lower than the second threshold, and

- the shift from the current ratio r to the higher ratio r+ is authorised if the parameter representative of the power which can be produced by the power unit at the engine speed N(r+) is higher than said second threshold.

2. A process according to claim 1 **characterised in that** said powers which can be produced by the power unit at the current engine speed N(r) and the speed N(r+) are the maximum powers which can be produced by the power unit at the engine speeds in question.

3. A process according to one of claims 1 and 2 **characterised in that** the parameter representative of the powers taken into account for determining the thresholds and the powers which can be produced by the power unit is selected from power, torque or longitudinal force.

4. A process according to claim 2 **characterised in that** the first threshold (NMIN-) and the second threshold (NMIN+) are expressed in the form of engine speeds by means of modelling making it possible to establish a correspondence between the powers represented by said first and second thresholds and corresponding engine speeds, said modelling being that of a curve characteristic of the power unit giving the variation in a parameter representative of the maximum power which can be produced by said power unit in dependence on the engine speed,

- a reduction in length of the reduction ratio of the transmission is controlled if the current engine speed N(r) is lower than said first threshold (NMIN-),

- the increase in length of the transmission ratio of the transmission ratio is inhibited if the engine speed N(r+) is lower than said second threshold (NMIN+), and

- the shift from the current ratio r to the higher ratio r+ is authorised if the engine speed N(r+) is higher than said second threshold (NMIN+),

5. A process according to one of claims 1 to 4 **characterised in that** calculation of the resisting force applied to the vehicle, making it possible to determine the minimum power (PRES) which is to be produced by the power unit to maintain a speed reference, comprises a step of calculating the current force produced by the power unit (PGMP), the mass of the vehicle (MV) and its acceleration ($\gamma$).

6. A process according to claim 5 **characterised in that** the mass of the vehicle (MV) is determined by a dynamic estimate of the mass of the vehicle.

7. A process according to one of claims 1 to 6 **characterised in that**, in the braking phases, calculation of the resisting force comprises a step in which the value of the force produced by the braking system is determined, said value being obtained by an item of information representative of the braking pressure and a model establishing a correspondence between said pressure and said braking force.

8. A process according to one of claims 1 to 6 **characterised in that** in the braking phases the calculation of the resisting force is suspended.

9. A process according to one of claims 1 to 8 **characterised in that** the margins $\Delta P+$ and $\Delta P-$ are determined taking account of the reduction ratio of the transmission which obtains (r) and/or a parameter representative of the resisting force.

10. A process according to one of claims 1 to 9 **characterised in that** the margin $\Delta P-$ is equal to zero and the margin $\Delta P+$ is selected to be constant and strictly positive.

11. A vehicle equipped with an automatic transmission with stepped ratios or with continuous variation comprising means for automatic choice of the reduction ratio of the transmission and pilot control means for supervising said automatic choice means, said pilot control means making it possible in particular to inhibit/authorise an increase in length of the reduction ratio or to trigger a reduction in length of the reduction ratio, **characterised in that** the choice of the reduction ratio of said transmission is controlled by a process according to one of claims 1 to 10.

12. A vehicle according to claim 11 **characterised in that** it comprises an automatic system for regulating/limiting speed.

**Patentansprüche**

1. Verfahren zur Steuerung der Auswahl der Übersetzung eines automatischen Getriebes mit abgestuften Gängen oder mit kontinuierlicher Variation für ein Fahrzeug, aufweisend Steuerungsmittel zum Unterhinden/Erlauben einer Verlängerung der Übersetzung oder zum Auslösen einer Verkürzung der Übersetzung, **dadurch gekennzeichnet, dass**:

   - man die laufende Motordrehzahl N(r) misst.
   - man die Motordrehzahl N(r+) bestimmt, welche der Motor des Fahrzeugs einnehmen würde, wenn man mit einer Verlängerung der Übersetzung des Getriebes fortfahren würde, wobei man die laufende Übersetzung r zu einem höheren Gang r+ übergehen lässt,
   - man eine erste Schwelle (PMIN-, NMIN-) einer Größe bestimmt, welche stellvertretend für die minimale Leistung (PRES) ist, welche durch die Antriebsgruppe geliefert werden muss, um einen Geschwindigkeitssollwert des Fahrzeugs aufrechtzuerhalten, wobei die Leistung um eine Spanne (ΔP-) erhöht wird,
   - man eine zweite Schwelle (PMIN+, NMIN+) von der gleichen Größe bestimmt, welche stellvertretend ist für die minimale Leistung (PRES), welche durch die Antriebsgruppe in dem Getriebegang r+ geliefert werden muss, um den Geschwindigkeitssollwert des Faluzeugs aufrechtzuerhalten, wobei die Leistung um eine Spanne (ΔP+) erhöht wird, wobei die erste Schwelle streng niedriger als die zweite Schwelle ist,
   - man eine Verkürzung der Übersetzung des Getriebes befiehlt, wenn die Größe, welche stellvertretend für die Leistung ist, die durch die Antriebsgruppe bei der laufenden Drehzahl N(r) geliefert werden kann, niedriger als die erste Schwelle ist,
   - man die Verlängerung der Übersetzung des Getriebegangs unterbindet, wenn die Größe, welche stellvertretend für die Leistung ist, welche durch die Antriebsrgruppe bei der Drehzahl N(r+) geliefert werden kann, niedriger als die zweite Schwelle ist,
   - man den Übergang des laufenden Gangs r auf den höheren Gang r+ erlaubt, wenn die Größe, welche stellvertretend für die Kraft ist, welche durch die Antriebsgruppe bei der Drehzahl N(r+) geliefert werden kann, größer als die zweite Schwelle ist.

2. Verfahren nach Anspruch 1, **dadurch gekennzeichnet, dass** die Leistungen, welche durch die Antriebsgruppe bei der laufenden Drehzahl N(r) und bei der Drehzahl N(r+) geliefert werden können, die maximalen Leistungen sind, welche durch die Antriebsgruppe bei den in Betracht gezogenen Drelzzahlen geliefert werden können.

3. Verfahren nach einem der Ansprüche 1 oder 2, **dadurch gekennzeichnet, dass** die Größe, welche stellvertretend für die Leistungen ist, welche für die Bestimmung der Schwellen und der Leistungen in Betracht gezogen werden, welche durch die Antriebsgruppe geliefert werden können, aus der Leistung, dem Moment oder der longitudinalen Kraft ausgewählt wird.

4. Verfahren nach Anspruch 2, **dadurch gekennzeichnet, dass** man die erste Schwelle (NMIN-) und die zweite Schwelle (NMIN+) in der Form von Motordrehzahlen mittels einer Modellierung ausdrückt, welche es erlaubt, eine Übereinstimmung zwischen den Leistungen, welche durch die erste und die zweite Schwelle dargestellt sind, und den entsprechenden Motordrehzahlen aufzustellen, wobei die Modellierung diejenige einer charakteristischen Kurve der Antriebsgruppe ist, welche die Entwicklung einer Größe gibt, die stellvertretend für die maximale Leistung ist, welche durch die Antriebsgruppe in Abhängigkeit von der Motordrehzahl geliefert werden kann

   - man eine Verkürzung der Übersetzung des Getriebes steuert, wenn die laufende Motordrehzahl N(r) niedriger als die erste Schwelle (NMIN-) ist,
   - man die Verlängerung der Übersetzung des Getriebegangs unterbindet, wenn die Motordrehzahl N(r+) niedriger als die zweite Schwelle (NMIN+) ist,
   - man den Übergang des laufenden Gangs auf den höheren Gang r+ erlaubt, wenn die Motordrehzahl N(r+) größer als die zweite Schwelle (NMIN+) ist.

5. Verfahren nach einem der Ansprüche 1 bis 4, **dadurch gekennzeichnet, dass** die Berechnung des Fahrwiderstands, welcher auf das Fahrzeug ausgeübt wird, welche es erlaubt, die minimale Leistung (PRES) zu hestim men, welche durch die Antriebsgruppe zum Aufrechterhalten eines Geschwindigkeitssollwerts geliefert werden muss, einen Schritt einer Berechnung der laufenden Kraft, welche durch die Antriebsgruppe (PGMP) geliefert wird, des Gewichts des Fahrzeugs (MV) und seiner Beschleunigung (γ) aufweist.

6. Verfahren nach Anspruch 5, **dadurch gekennzeichnet, dass** das Gewicht des Fahrzeugs (MV) über eine dynamische Schätzung des Gewichts des Fahrzeugs bestimmt wird.

7. Verfahren nach einem der Ansprüche 1 bis 6, **dadurch gekennzeichnet, dass** während der Bremsphasen die Berechnung des Fahrwiderstands einen Schritt aufweist, in welchem man den Wert der Kraft bestimmt, welche durch das Bremssystem erzeugt wird, wobei der Wert durch eine Information erhalten wird, welche stellvertretend für den Bremsdruck ist, und ein Modell, welches eine Übereinstimmung zwischen dem Druck und der Bremskraft aufstellt.

8. Verfahren nach einem der Anspruchs 1 bis 6, **dadurch gekennzeichnet, dass** man während der Bremsphasen die Berechnung des Fahrwiderstands einstellt.

9. Verfahren nach einem der Ansprüche 1 bis 8, **dadurch gekennzeichnet, dass** die Spannen $\Delta P+$ und $\Delta P-$ unter Berücksichtigung der laufenden Übersetzung des Getriebes (r) und/oder einer Größe, welche stellvertretend für den Fahrwiderstand ist, bestimmt werden.

10. Verfahren nach einem der Ansprüche 1 bis 9, **dadurch gekennzeichnet, dass** die Spanne $\Delta P-$ gleich null ist und die Spanne $\Delta P+$ als eine konstante und streng positive ausgewählt wird,

11. Fahrzeug, welches mit einem automatischen Getriebe mit abgestuften Gängen oder mit kontinuierlicher Variation ausgestattet ist, aufweisend Mittel zur automatischen Auswahl der Übersetzung des Getriebes und Mittel zur Steuerung zum Überwachen der automatischen Auswahlmittel, wobei die Steuerungsmittel es insbesondere erlauben, eine Verlängerung der Übersetzung oder das Auslösen einer Verkürzung der Übersetzung zu unterbinden/zu erlauben, **dadurch gekennzeichnet, dass** die Auswahl der Übersetzung des Getriebes durch ein Verfahren nach einem der Ansprüche 1 bis 10 gesteuert wird.

12. Fahrzeug nach Anspruch 11, **dadurch gekennzeichnet, dass** es ein automatisches System zur Regelung/Begrenzung der Geschwindigkeit aufweist.

**FIG.1**

# FIG.2

PENTE

5% ⊣

t

VITESSE

100 KM/H ⊣

t

P

···································· PMAX(4)

— — — — — — — — PMIN+

···································· PMAX(5)

PRES = PMIN-

t

N

···································· N(4)

— — — — — — — — NMIN+

···································· N(5)

NMIN-

t

RAPPORT

5 ⊣

4 ⊣

t

# FIG.3

# FIG.4

# FIG.5

PENTE

3%

t5   t

VITESSE

100 KM/H

t5   t

P

PRES = PMIN-
PMAX(5)

t5   t6   t

N

NMIN-
N(5)

t5   t6   t

RAPPORT

5

4

t5   t6   t

# FIG.6